# EUROPEAN PATENT SPECIFICATION

(11) **EP 4 585 038 B1**
(45) Date of publication and mention of the grant of the patent: **07.10.2026**
(21) Application number: 25150859.4
(22) Date of filing: 09.01.2025
(51) Int. Cl.: A01K 27/00

(54) **A HARNESS FOR A QUADRUPEDAL ANIMAL**
GESCHIRR FÜR EIN VIERBEINIGES TIER
HARNAIS POUR ANIMAL QUADRUPÈDE

(30) Priority: 09.01.2024 EP 24150965
(43) Date of publication of application: 16.07.2025
(73) Proprietor: Tjappo AB, 38272 Orrefors (SE)
(72) Inventor: TIGERLIND, Sandra, 38272 ORREFORS (SE)
(74) Representative: Öberg & Sjöberg AB

(56) References cited:
- EP-B1- 2 965 620
- DE-U1- 202019 106 378
- NO-A1- 20 210 398
- US-A- 6 161 505
- US-A1- 2011 083 616
- US-B2- 7 131 400

## Description

### Technical field

The proposed technology relates generally to a harness intended to be attached and used to control a quadrupedal animal, such as a dog.

### Background

A collar is used to restrain or identify a dog and is placed around the neck of quadrupedal. A problem with collars is that the structures of the neck of the animal where the collar would lie may become injured.

A harness spreads the pressure across the chest, shoulders and back of the animal reducing the risk of injury to the neck of the animal. One problem with harnesses is that they may restrict the shoulder movement of the animal. The strap placement of a harness coupled with a further strap wrapped around the front part of an animal's chest may make it difficult for the animal to fully extend its forelimbs when walking or running. When shoulder movement is restricted, it puts pressure on the rest of the animal's body.

Less restrictive harnesses are known, however a problem with such harnesses an increased risk that the animal breaks free from the harness and runs away, posing a danger to the animal itself, humans or traffic. Many less restrictive harnesses may be backed out of by the animal. Less restrictive harnesses also increase the risk that the animal comes partly free and gets tangled in the harness which, in itself, poses a risk of injury to the animal. Animal harnesses are disclosed in NO 20 210 398 A1, US 6 161 505 A, US 7 131 400 B2, US 2011/083616 A1, DE 20 2019 106378 U1 and EP 2 965 620 B1.

### Object

It is an object of the proposed technology to provide a harness with an improved fit on an animal that reduces the risk of injury to the animal when worn. It is a further object to provide a harness that reduces the possibility of the animal backing out of the harness.

### Summary

In a first aspect of the proposed technology, a harness for a quadrupedal animal, such as a dog, is proposed, the harness comprising:
a first strap, a second strap, a third strap, and a fourth strap,
wherein the first strap, the second strap, the third strap, and the fourth strap are connected to one another at a first connection point, and
wherein the first strap, the second strap, the third strap, and the fourth strap are connected to one another, or configured to, or arranged to, be connected to one another at, a second connection point, and
wherein the first strap, the second strap, the third strap, and the fourth strap extend, or are configured to, or arranged to, extend, from the first connection point to the second connection point,
wherein the first connection point is configured to, or arranged to, be positioned at a neck, or between the nape and shoulders, of the animal,
wherein the second connection point is configured to, or arranged to, be positioned at the croup of the animal, and
the first strap is configured to, or arranged to, extend from the first connection point, across the neck, across the sternum or prosternum, in between the front legs, across a first side, or left side, of the chest of the animal, and to the croup, or rump, of the animal, and
the second strap is configured to, or arranged to, extend from the first connection point, across the neck, across the sternum or prosternum, in between the front legs, and across a second side, or right side, of the chest of the animal, and to the croup, or rump, of the animal, and
the third strap is configured to, or arranged to, extend from the first connection point, across the first side of the chest, below, or transversely across, the abdomen or belly, to the second connection point,
the fourth strap is configured to, or arranged to, extend from the first connection point, across the second side of the chest, below or transversely across, the abdomen or belly, to the second connection point,
the first strap and the third strap cross, or overlap, one another, at a fourth connection point, or are configured to, or arranged to, cross, or overlap, one another, at a fourth connection point, wherein the fourth connection point is configured to, or arranged to, be positioned, on the first side of the chest, of the animal,
the second strap and the fourth strap cross, or overlap, , one another, at a fifth connection point, or are configured to, or arranged to, cross, or overlap, one another, at a fifth connection point, wherein the fifth connection point is configured to, or arranged to, be positioned, on the second side of the chest, of the animal,
the third strap and the fourth strap cross, or overlap, one another, at a sixth point, or are configured to, or arranged to, cross, or overlap, one another, at a sixth point, the sixth connection point configured to, or arranged to, be positioned, at the abdomen or belly, of the animal.

Worded differently, the harness has an intended position, or placement, on a quadrupedal animal, such as a dog, wherein in the intended position, or placement, the first strap, the second strap, the third strap, and the fourth strap are connected to one another at, and extends from, the first connection point that is positioned at a neck, or between the nape and shoulders, of the animal, and wherein the first strap extends from the first connection point, across the neck, across the sternum or prosternum, in between the front legs, across a first side, or left side, of the chest of the animal, and to the croup, or rump, of the animal, and the second strap extends from the first connection point, across the neck, across the sternum or prosternum, in between the front legs, and across a second side, or right side, of the chest of the animal, and to the croup, or rump, of the animal, and the third strap extends from the first connection point, across the first side of the chest, below, or transversely across, the abdomen or belly, and up to the croup, of the animal, and the fourth strap extends from the first connection point, across the second side of the chest, below or transversely across, the abdomen or belly, and up to the croup, of the animal, and in the intended position, or placement, the first strap and the third strap cross one another on the first side of the chest, of the animal, and the second strap and the fourth strap cross one another on the second side of the chest, of the animal, and the third strap and the fourth strap cross one another at the abdomen or belly, of the animal, and the first strap, the second strap, the third strap, and the fourth strap are connected to one another, at the second connection point positioned at the croup of the animal. It is understood that the intended position, or placement, is the position when the harness is arranged on, or mounted on, the animal such as the dog. Worded differently, the intended position, or placement, may be a position when the harness is worn.

Worded yet differently, the first strap, the second strap, the third strap, and the fourth strap are connected to one another at the first connection point, and wherein the first strap, the second strap, the third strap, and the fourth strap are connected to one another, at the second connection point, and wherein the first strap, the second strap, the third strap, and the fourth strap extend from the first connection point to the second connection point, wherein the first strap and the third strap cross, or overlap, one another, at the fourth connection point, wherein the first strap and the third strap are connected, or coupled, to each other, and the second strap and the fourth strap cross, or overlap, one another, at the fifth connection point, wherein the second strap and the fourth strap are connected, or coupled, to each other, and wherein the third strap and the fourth strap cross, or overlap, one another, at the sixth connection point, arranged, or positioned, between the second connection point and the respective fourth connection point and the fifth connection point.

In a second aspect, the use of the harness according to the first aspect, on a quadrupedal animal, such as a dog, is proposed,
wherein the first connection point is positioned at a neck, or between the nape and shoulders, of the animal,
wherein the second connection point is positioned at the croup of the animal, and
wherein the first strap is positioned and extends from the first connection point, across the neck, across the sternum or prosternum, in between the front legs, across a first side, or left side, of the chest of the animal, and to the croup, or rump, of the animal, and
wherein the second strap is positioned and extends from the first connection point, across the neck, across the sternum or prosternum, in between the front legs, across a second side, or right side, of the chest of the animal, and to the croup, or rump, of the animal,
wherein the third strap is positioned and extends from the first connection point, across the first side of the chest, below, or transversely across, the abdomen or belly, to the second connection point,
wherein the fourth strap is positioned and extends from the first connection point, across the second side of the chest, below or transversely across, the abdomen or belly, to the second connection point,
wherein the first strap and the third strap cross, or overlap, one another, on the first side of the chest, of the animal,
wherein the second strap and the fourth strap cross, or overlap, one another, on the second side of the chest, of the animal, and
wherein the third strap and the fourth strap cross, or overlap, one another, at the abdomen or belly, of the animal.

In a third aspect, of the proposed technology, a system comprising the harness and a leash, is proposed, wherein the harness comprises a leash connector at the first connection point or the second connection point, and the leash is connected, or coupled, to the harness via the leash connector, at the first connection point or the second connection point.

The harness discussed herein may reduce the risk of the animal backing out of or coming loose from the harness while less restrictive on the front legs and shoulders of the animal. In addition, the harness reduces the risk of the animal getting strangled or having a hard time breathing during use by the first and second strap extending across the neck, across the forechest, in between the front legs, across a first side of the chest of the animal, and to the croup of the animal. Thereby the chest of the animal is not encircled by a single strap. This further reduces pressure around the chest of the dog and provides for less restriction of the shoulder movement of the animal.

It is specified above that the harness is for a quadrupedal animal, such as a dog. It is understood that a quadrupedal has a set of forelegs and a set of rearlegs.

It is understood that the first side, or left side, and the second side, or right side, are opposite sides of the animal and that the first, or left, front leg attaches to the animal at the left side of the animal, and that the second, or right, front leg attaches to the animal at the right side of the animal. It is further understood that an animal has a rear end and that the croup, or rump, is located at the rear end and that the animal has a front end, and that the head of the animal is located at the front end of the animal. It is further understood that the animal has a back end, or back side, about where the spine of the animal extends.

When the animal is a dog, it is understood that the nape of is the part of the neck where the neck joins the base of the skull at the back of the head. The throat is beneath the jaws of the dog. The crest starts at the nape and ends at the withers and that the withers are the top point of the shoulders, making them the highest point along the dog's back. The neck runs from the head to the shoulders. The shoulders are the top sections of the forelegs from the withers to the elbow. The prosternum is the top of the sternum, the bone that ties the rib cage together and that the chest is the entire rib cage of the dog. The back runs from the point of the shoulders to the end of the rib cage. The term back is sometimes used to describe the back and the loin. The flank refers to the side of the dog between the end of the chest and the rear leg. The belly or abdomen is the underside of the dog from the end of its rib cage to its tail. The loin is the back between the end of the rib cage and the beginning of the pelvic bone. The rump, or croup, is the proverbial rear end, and where the pelvis bone is. The waist, or the waistline, is located at the rear of the abdomen, below the rib cage, in front of the hip of the dog.

It is specified above that the harness comprises a first strap, a second strap, a third strap, and a fourth strap and that the first strap, the second strap, the third strap, and the fourth strap are connected to one another at, and extends from, a first connection point. The first connection point may be formed by a first connector.

The first connector may comprise one or a plurality of openings arranged to receive, or thread through, and secure, the first strap, the second strap, the third strap and the fourth strap. It is understood that one opening may connect to, and secure, one or more straps. For example, the first connector may be a D-shaped or oblong metal ring that has a single opening. In a further example, the first connector may be a D-shaped or oblong metal ring and each strap may have a buckle, or carabiner, arranged at an end of a strap, that connects to the first connector.

The first strap, the second strap, the third strap and the fourth strap may be formed as separate straps each being separately connected, or coupled, to the first connector.

Alternatively, the first and second strap may be formed by a single common strap that is fixed, or connected, to the first connector, and a first portion of the common strap extends from the first connector and forms the first strap, and a second portion of the common strap extends from the first connector and forms the second strap. The third and fourth strap may also be formed by a further single common strap in the same manner as described above for the first strap and the second strap.

The first strap, the second strap, the third strap and/or the fourth strap may be removably, or releasably, connected, or coupled, to the first connector. For example, the first strap and the second strap may be fixedly connected, or attached, to the first connector and the third strap and the fourth strap may comprise a buckle or a carabiner attached to the end of a strap that is arranged to be connected to the first connector. This may further simplify the application of the harness to a dog.

It is understood that the first strap, the second strap, the third strap and the fourth strap may be a strap, or a cord, or a rope, or a webbing. It is understood that webbing is a strong fabric woven as a flat strip or tube of varying width and fibers, often used in place of rope. Each strap may thereby be formed as a narrow, flat strip or thong of a flexible material. Alternatively, each strap may have a circular or elliptic cross-sectional shape. Each strap may have a width and a thickness. It is understood that a strap may have a varying cross-section, or varying width, or thickness, along the length of the strap. The width may be a factor of 10 to 100 times the thickness of a strap.

For example, each strap may have a width of between 0.01 m, or 1 cm, to 0.05 m, or 5 cm.

It is understood that each strap may have a longitudinal extension. Each strap may be flexible. This means that the strap may adjust and conform to the body shape of the animal. This provides a better fit and a more secure harness that reduces chaffing of the animal and is more comfortable to wear.

Each strap may have a length of 0.4 m to 1 m. Each strap may have a thickness of 0.5 mm to 4 mm, such as 1 mm to 2 mm.

Each strap may be a fabric strap, formed by weaving yarn to form a weave. It is understood that weaving is a method of textile production in which two distinct sets of yarns or threads, are interlaced at right angles to form the strap.

Each strap may be formed by one single type of yarn, or thread, or by two different types of yarn. Worded differently, the two distinct sets of yarn may be of the same material and with the same properties, or may be of different material and have different properties. Each strap may be made from yarn of nylon, polyester or polypropylene.

When made from two different types of yarn, the strap may be a composite strap. For example, one of the yarns may be a reinforced yarn in relation to the other yarn. Worded differently, one of the yarns may have a longitudinal strength being a factor higher than the other yarn. For example, a factor of 1.5-5 times, such as 2-4 times higher.

In a further example, the weave may comprise a third yarn, such as a metallic yarn, or thread, that may be weaved in, and thereby form the composite yarn. This may provide additional strength of the strap and may prevent the strap from being cut with a scissor or break during use.

In a further alternative the composite strap may comprise a first layer of material, or first weave, overlaid, or attached to, a second layer of material, or second weave. The two layers may be overlaid, or laminated, using a flexible adhesive. Alternatively, the two layers may be sewn together. In one example, the second layer may be a light reflective layer arranged to increase, or improve, visibility in the dark.

In a further alternative, the strap may be an elastic strap, comprising at least one elastic yarn forming the weave. For example, the elastic yarn may be made of an elastomer. The elastomer may be a synthetic elastomer or a rubber. The strap may then permit stretching and better conform to the movements of the dog thus further reducing the risks of injury when worn. In a further example, the strap may be formed by a first strap section of a first material and a second strap section of an elastic material. This provides for control of where along a strap the strap can elongate or stretch, when worn.

Each strap may be a coated strap. It is understood that for a coated strap a material is attached, or coated, to the surface of the strap. The coating may be a polymer coating, such as a urethane or silicone-based coating. The coating may be applied to the strap in liquid form and subsequently solidify on the strap. The coating may increase friction against the skin of the animal and prevent chafing of the animal skin. The coating may be applied on one side of the strap, or on both, or all of, the sides of the strap. In one example, the strap is a polyester strap, or webbing, coated in polyvinyl chloride. The coating may be applied to a flat first surface of the strap or to the flat first surface and the opposite flat second surface of the strap.

The first strap, the second strap, the third strap and the fourth strap may share properties, such as width or length, or material, or coating, or structure. Alternatively, the first strap, the second strap, the third strap and the fourth strap may be different, and not share the above properties.

It is specified above that the first strap, the second strap, the third strap, and the fourth strap are connected to, or configured to, or arranged to be connected to, one another at a second connection point, and that the first strap, the second strap, the third strap, and the fourth strap configured to extend from the first connection point to the second connection point. This means that the first strap, the second strap, the third strap and the fourth strap, extend between the first connection point and the second connection point.

It is specified above that the first strap is configured to, or arranged to, extend from the first connection point to the second connection point. The second connection point is configured to, or arranged to, be positioned at the croup, or rump, of the animal. The first strap may extend from the first connection point, across the neck, across the sternum, or prosternum, in between the front legs, diagonally upwards, across a first side, or left side, of the chest of the animal, and to the croup, or rump, of the animal. Worded differently, the first strap may extend from the first connection point, down over the sternum, or prosternum, of the animal and in between the front legs of the animal, and along a left side of the animal, or the left side chest, towards the croup, or rump of the animal. It is understood that the first strap may extend on the inner side of the left front leg.

The first strap may form a first loop. The first strap may extend from the first connection point to the second connection point. Worded differently, the first strap may be connected to, and extend between, the first connection point and the second connection point. The first loop may form an opening for configured to receive a left front leg of the animal. This has the effect that the first strap does not extend over, or limit the movement of, the shoulder of the left front leg.

It is specified above that the second strap is configured to, or arranged to, extend from the first connection point to second connection point and that the second connection point is configured to, or arranged to, be positioned at the croup, or rump, of the animal.

The second strap may extend from the first connection point, across the neck, across the sternum, or prosternum, in between the front legs, diagonally upwards, across a second side, or right side, of the chest of the animal, and to the croup, or rump, of the animal. Worded differently, the second strap may extend from the first connection point, down over the forechest of the animal and in between the front legs of the animal, and along a right side of the animal, or the right side of the chest, towards the croup, or rump of the animal. It is understood that the second strap may extend on the inner side of the right front leg. The second strap may extend from the first connection point to the second connection point. Worded differently, the second strap may be connected to, and extend between, the first connection point and the second connection point. The second strap may form a second loop. The second loop may form an opening configured to receive a right front leg of the animal. This has the effect that the second strap does not extend over, or limit the movement of, the shoulder of the right front leg.

It is specified above that the third strap is configured to, or arranged to, extend from the first connection point to second connection point and that the second connection point is configured to, or arranged to, be positioned at the croup, or rump, of the animal. Worded differently, the third strap may be connected to, and extend between, the first connection point and the second connection point. The third strap may be arranged to extend from the first connection point, loop around the abdomen of the animal, and to the croup of the animal, and the second connection point.

Worded differently, the third strap may be arranged to extend from the first connection point, diagonally downward, across the first side, or left side, of the chest, below, or transversely across, the abdomen or belly, and up to the croup, or rump, of the animal, and the second connection point. Wording the extension of the third strap further differently, the third strap may be arranged to extend from the first connection point to the second connection point, and entwine, or encircle, forming a spiral around, the abdomen of the animal between the first connection point and the second connection point, or croup, or rump, of the animal.

It is specified above that the fourth strap is configured to, or arranged to, extend from the first connection point to second connection point and that the second connection point is configured to, or arranged to, be positioned at the croup, or rump, of the animal. The fourth strap may be arranged to extend from the first connection point, loop around the abdomen of the animal, and to the croup of the animal, and the second connection point. Worded differently, the fourth strap may be connected to, and extend between, the first connection point and the second connection point.

Worded differently, the fourth strap may be arranged to extend from the first connection point, diagonally downward, across the second side, or right side, of the chest, below, or transversely across, the abdomen or belly, and up to the croup, or rump, of the animal. Wording the extension of the fourth strap further differently, the fourth strap may be arranged to extend from the first connection point to the second connection point, and entwine, or encircle, forming a spiral around, the abdomen of the animal between the first connection point and the second connection point, or croup, or rump, of the animal.

The first strap and the third strap may be arranged to cross one another on the first side, or left side, of the chest of the animal, and the second strap and the fourth strap may be arranged to cross one another on the second side of the chest of the animal, or the right side.

Worded differently, the first strap and the third strap may be arranged to cross, or overlap, one another, at a fourth connection point. The fourth connection point may be configured to, or arranged to, be positioned, on the first side of the chest, of the animal. The second strap and the fourth strap may be arranged to cross, or overlap, one another, at a fifth connection point. The fifth connection point may be configured to be positioned, on the second side of the chest, of the animal.

It is understood that at the respective crossing, or at the fourth connection point and the fifth connection point, the first strap may contact the third strap, and the second strap may contact the fourth strap. The crossing of the first strap and the third strap, and the second strap and the fourth strap may be at an angle. Worded differently, at the cross, or overlap, between the first strap and third strap, the first strap may be transverse to the third strap, and at the cross, or overlap, between the second strap and fourth strap, the first strap may be transverse to the third strap.

The first strap may form a first angle and a second angle relative to the third strap. For the first angle between the first strap and the third strap, the angle may be an acute angle, or an angle less than 90 degrees. For the second angle between the first strap and the third strap, the second angle be an obtuse angle, or an angle of more than 90 degrees and less than 180 degrees.

The second strap may form a first angle and a second angle relative to the fourth strap. For the first angle between the first strap and the third strap, the angle may be an acute angle, or an angle less than 90 degrees. For the second angle between the second strap and the fourth strap, the second angle be an obtuse angle, or an angle of more than 90 degrees and less than 180 degrees.

In one example, the first angle between the first strap and the third strap, may be between 30 degrees to 90, such as 40 degrees to 70 degrees. In one example, the first angle between the second strap and the fourth strap, may be between 30 degrees to 90, such as 40 degrees to 70 degrees.

The first strap and the third strap may form a first loop between the first connection point and the crossing of the first strap and the third strap, or the fourth connection point.

At the crossing, or the fourth connection point, the third strap may comprise a first link, or first strap connector, that couples, or connects, the first strap to the third strap. Thus, the first link maintains, or defines a position wherein the first and third strap crosses. At the same time the first link allows for the first strap to better adjust to the shape of a dog. This provides for a better fitting harness that reduces the risk of injury to the dog when worn. In addition, when a leash is attached to the second connection point, and the dog pulls on the leash, the force from the leash pulling relative to the dog, may directly be transmitted via the first strap and the second strap to the sternum, or front chest, and the area between the front legs of the dog.

In one example, the first link, or first strap connector, may be arranged on the third strap and the first strap may extend through, the first link, or couple, or connect to the first strap connector.

Alternatively, the first strap may comprise the first link, or first strap connector, and the third strap may couple, or connect, to the first strap by the first link, or first strap connector.

The first link, or first strap connector, may be in the form of a loop or ring arranged for the first strap to pass through. Thus, the first link may cooperate with the first strap to prevent the first strap from shifting in position along the third strap.

It is specified above that the first strap or the third strap may comprise the first link, or first strap connector, that couples, or connects, the first strap to the third strap, and that the first link, or first strap connector, may form the fourth connection point.

In one example, the second strap or the fourth strap may also comprise a first link, or first strap connector, that couples, or connects, the second strap to the fourth strap wherein the first link, or first strap connector, in this example, may form the fifth connection point. Worded differently the second strap or the fourth strap may comprise the first link. This means that the third strap and the fourth strap may comprise at least one first link arranged to connect to a respective first strap or second strap.

The first strap, or the third strap, may comprise a plurality of first links, or first strap connectors.

The second strap, or the fourth strap, may comprise a plurality of first links, or first strap connectors.

The first strap, the second strap, the third strap and the fourth strap may each comprise a plurality of first links.

The plurality of first links may be positioned along a longitudinal extension of a strap. This allows for the harness to adapt to different sized animals, be threading a strap through one of the links on another strap. In addition, this reduces the inconvenience or stress of the dog when the harness is mounted, by allowing a strap to slide and be loosened to widen a front leg loop.

It is specified above that the composite strap may comprise a first layer of material, or first weave, overlaid, or attached to, a second layer of material, or second weave. The first layer may be attached to the second layer to form a first link, or a plurality of links, between the first layer and the second layer. The first weave may be attached to the second weave by adhesives or by sewing. Alternatively, the first weave may be attached to the second weave by rivets.

The first layer and the second layer may be attached along the strap, at a first position and a second position, and the first link may be formed between the first position and the second position, wherein the first layer and the second layer are attached, or connected, to each other.

Alternatively, the first layer may be attached to the second layer by hook and loops. The first link may then be positioned along the length of a strap to better conform to the animal's anatomy. For example, the third strap or the fourth strap may be a composite strap wherein the first layer of material, or first weave, comprises hooks and the second layer of material, or second weave, comprises loops, wherein the hooks and loop cooperate to fasten the second layer, or second weave, to the first layer, or first weave. The hooks and loops may be intermittently arranged on the third strap and the fourth strap. This means that a plurality of separate strips, or patches, of hooks and loops are attached to the first layer of material, or first weave, and the second layer of material, or second weave, wherein a first strip, or patch, is separated from a second strip by a spacing. The spacing formed between the first layer and the second layer may thereby form the first link, or first links, arranged to receive, or thread, a strap through.

It is specified above that the third strap and the fourth strap may be configured to, or arranged to, cross, or overlap, one another at a sixth connection point. The sixth connection point may be positioned at the abdomen or belly of the animal. Worded differently, the third strap and the fourth strap may be arranged to be positioned so that the third strap and the fourth strap cross, or overlap, at the waist, or waistline, of the abdomen of the animal, or between the abdomen and the rear legs of the animal. The third strap and fourth strap may cross, or overlap, between the first link of the first strap and the second strap, and the second connection point. The third strap and the fourth strap may form a fourth loop between the first connection point and the crossing of the third strap and the fourth strap at the abdomen or belly of the dog, or the sixth connection point. The fourth loop may be configured to, or arranged to, encircle the chest of the dog.

The third strap and the fourth strap may further form a fifth loop between the crossing of the third strap and the fourth strap at the belly, or the sixth connection point, and the second and the second connection point. The fifth loop may be arranged to encircle the dog at the rear of the dog posterior to the loin and anterior to the tail. Thereby, the harness further provides for improved securing of an animal's rear body to the harness. This further reduces the risk of the dog backing out of the harness.

It is specified above that the first strap, the second strap, the third strap, and the fourth strap are configured to, arranged to, be connected, at a second connection point configured to, or arranged to, be positioned, at the croup, or rump, of the animal. Worded differently, the first strap, the second strap, the third strap, and the fourth strap may be connected, and fixed to one another, at a second connection point.

The connection between the first strap, the second strap, the third strap and the fourth strap relative to the second connection point may be adjustable in length. This means that the length of a strap between the first connection point and the second connection point may be adjustable, or lengthened, or increased, or shortened or decreased. This allows for fitting of the harness to different sized animals.

It is specified above that the first strap, the second strap, the third strap, and the fourth strap may be connected to one another at the second connection point. The second connection point may be formed by a second connector.

The first strap, the second strap, the third strap and/or the fourth strap may be removably, or releasably, connected, or coupled, to the second connector. The second connector may comprise one or a plurality of openings arranged to receive, or thread through, and secure a respective strap. Alternatively, the second connector may be a D-shaped or oblong metal ring, and each strap may have a buckle, or carabiner, arranged at an end of a strap, that connects to the second connector. The buckle may allow for a strap to be adjustable along the length of a strap. The carabiner may comprise a lock, such as a combination lock to prevent the removal of the harness from an animal.

Alternatively, the straps may be arranged with hook and loop fasteners, or hook-and-pile, fasteners, having hooks arranged on a first side of a strap and loops arranged on an opposite side of the strap. This allows for adjusting the tightness of the harness against the animal, and the first strap, the second strap, the third strap and the fourth strap may be connected and stacked on top of each other at the second connection point.

It is understood that hook and loop fasteners comprise a first component that features tiny hooks and a second component that features smaller loops, and when the two components are pressed together the hooks catch in, or on, the loops and the two pieces fasten or bind temporarily.

The second connector may share properties with, or be the same in structure as, the first connector.

It is further specified that the first strap and the second strap may be connected at a third connection point. Worded differently, the first strap and the second strap may be configured to, or arranged to, be connected at a third connection point. The third connection point may be configured to, or arranged to, be positioned at the sternum, the prosternum, or front chest, of the animal. A third loop, or opening, may thus be formed between the first and second strap, between the first connection point and the third connection point. The third loop may be configured to, or arranged to, receive the head of the dog, and encircle the neck of the dog. It is understood that the first strap may encircle part of, or about half, the neck of the dog at the first, or left side, of the dog and the second strap may encircle part of, or about half, the neck of the dog at the second, or right side, of the dog.

The third connection point, that forms a third loop, may further reduce the risk of the animal backing out of or coming loose from the harness while being less restrictive on the front legs and shoulders of the animal.

The first strap and the second strap may cross, or overlap, at the third connection point. When the first strap and the second strap cross at the third connection point, the second strap may cross, or overlap, the third strap at the fourth connection point, and the first strap may cross, or overlap, the fourth strap at the fifth connection point. In this example, the first strap may be configured to, or arranged to extend from the first connection point, across the neck, across the sternum or prosternum, in between the front legs, across a second side, or right side, of the chest of the animal, and to the croup, or rump, of the animal. In the same example, the second strap may be configured to, or arranged to extend from the first connection point, across the neck, across the sternum or prosternum, in between the front legs, across a first side, or left side, of the chest of the animal, and to the croup, or rump, of the animal.

Worded differently, the first strap and the second strap may cross at the third connection point, and after the cross, or overlap, at the third connection point, the first strap may extend on the second side, or right side, of the animal, and the second strap may extend on the first side, or left side, of the animal.

The third connection point may be formed by a third strap connector, or a strap lock, that connects and locks the first strap relative to the second strap. This means that the third loop formed between the first strap and second strap is prevented from being widened, or expanded, and contracted, or decreased. The third connector may comprise a housing and a locking element movable relative to the housing, wherein the locking element may assume a position to bias, or lock, the first strap and the second strap to each other and to the housing.

It is further specified that the first strap and the second strap may be connected at a fourth connection point arranged to be positioned at the forechest, or between the forelegs, of the animal. The fourth connection point may be arranged below the third connection point. The fourth connection point may be formed by a fourth strap connector, or strap lock, that connects and locks the first strap relative to the second strap. The fourth connection point, or fourth connector, may improve the fit of the harness to an animal that has short legs, such as a Dachshund. The fourth connector may be same in structure and form as the third connector. The fourth connection point, or fourth connector, may reduce chaffing of the first strap and the second strap relative to the dog's axilla, or forelegs. The fourth strap connector may share properties with the third strap connector. The fourth strap connector may thus be adjustable in the same manner as the third strap connector discussed below.

The third strap connector may be an adjustable third strap connector, that permits the third loop to be widened, or expanded, and contracted, or decreased. Worded differently, the third strap connector may connect the first strap and the second strap at different positions along the first strap and the second strap an allow, the third loop opening to be widened, or expanded, and contracted, or decreased. By adjusting the size of the third loop opening, the harness may be adapted to different sized dog. It further may simplify the arranging or application of the harness to a dog.

For example, the third strap connector may be formed a first member, or male member arranged on the first strap and a second member, or female member, arranged on the second strap, wherein the first member and the second member cooperate to lock the first strap relative to the second strap. For example, the third strap connector may be a snap fastener, or snap button, or press stud, or press fastener. For example, the first strap may be arranged with a plurality of male snap fastener members arranged along a portion of the first strap, and the second strap may be arranged with a plurality of female snap fastener members arranged along a portion of the second strap. The position of the third strap connector may thereby be adjustable along the first strap and the second strap by selection of a pair of male and female members to connect. The third strap connector point may thus be unlocked and the opening of the third loop may be adjusted by connecting a different pair of male members and female members of the third strap connector.

The third strap connector may be a strap compression lock that biases the first strap and the second strap against each other locking them relative to each other by compression and friction. Alternatively, the first strap and the second strap may be biased against each other and against a third strap connector housing. The third strap connector may comprise a spring element, or spring, or elastic element, that biases the firs strap and the second strap against each other and to the housing.

Alternative, the third strap connector may comprise a cam pivotably arranged to the housing, and at the rotation or the cam, the first strap and the second strap may be biased against each other and the housing, to lock the first strap and second strap relative to each other and the housing. The third strap connector may be formed by a first cam and a second cam arranged on opposite sides of the first strap and second strap. The first cam and the second cam may bias the first strap relative to the second strap and the housing to lock the first strap, the second strap and the strap lock in position along the first strap and the second strap.

Alternatively, the third strap connector may comprise a screw lock mechanism, formed by a first threaded member, and a second threaded member that cooperates with the first threaded member. The first strap and the second strap may then be positioned between the first threaded member and the second threaded member, and the first strap and second strap may be biased and locked relative to each other at the threading of the first member relative to the second threaded member.

Alternatively, the third strap connector may be a wedge lock mechanism, formed by the housing and a wedge movable relative to the housing, or slidable in and relative to a slot in the housing. The first strap and the second strap may be locked in at least one direction by being biased between the wedge and the housing. The wedge may be spring loaded by a spring element to assume a biasing position. The first strap and the second strap may be unlocked, or the biasing of the wedge lock overcome, by moving the wedge against the biasing of the spring element.

Alternatively, the wedge lock may comprise a first wedge and a second wedge movable relative to the housing, and the first strap and the second strap may be locked relative to each other and the housing in both a first direction and a second direction. The first wedge and the second wedge may be biased by a spring element, such as a spring, to assume a position that locks the first strap and the second strap.

It is specified above that the harness may have a first connector and a second connector. The first connector and/or the second connector may comprise a further attachment point, or ring, to interact with, and secure, an accessory such as a coat or cover, or a vehicle occupant retention mechanism or seat belt. The further attachment point may be arranged to connect with a dog leash.

The harness may further comprise a fifth strap. The fifth strap may extend from the first connection point, or first connector, along the back of the animal, to the second connection point, or second connector. The fifth strap may be connected, or coupled, to the first connection point, or first connector, and to the second connection point, or second connector. The fifth strap may be grabbed, or held, to hold back and prevent an animal, such as a dog, from lunging. The fifth strap my further comprise a buckle arranged to cooperate with a vehicle seat belt buckle. By the fifth strap attaching to the first connector and the second connector, an animal is securely attached and restrained in a vehicle during a vehicle crash or collision.

It is specified above that the harness with a leash may form a system. The leash may be arranged to connect, or couple, to the fifth strap. The leash may comprise a first end that connects to the first connector or the second connector. Alternatively, the leash may have a first end that connects to the first connector and a second end that connects to the second connector.

### Brief description of the drawings

A more complete understanding of the abovementioned and other features and advantages of the proposed technology will be apparent from the following detailed description of preferred embodiments in conjunction with the appended drawings, wherein:
Fig. 1 illustrates a quadrupedal in the form of a dog;
Fig. 2A shows the dog 1 in Fig. 1, viewed from a first side, or the left side, with the harness;
Fig. 2B shows the dog 1 in Fig. 1, viewed from a second side, or the right side, with the harness;
Fig. 2C shows the dog wearing the harness seen from the front;
Fig. 3A shows a first view of the harness in a first, partly disassembled state;
Fig. 3B shows the harness in a second, or assembled, state;
Fig. 3C shows a further example of a harness;
Fig. 4A shows an enlarged view of a first example of a third connector;
Fig. 4B shows a cross sectional view of the third connector of Fig. 4A along A-A;
Fig. 5A shows an enlarged view of an alternative example third connector;
Fig. 5B shows a cross-sectional view along B-B of the third connector of Fig. 5A;
Fig. 6A shows a top view of a further example of a third connector;
Fig. 6B shows a cross-sectional view of the third connector of Fig. 6A along C-C;
Fig. 7A shows a further example of a third connector in a locked state;
Fig. 7B shows a cross-sectional view of the third connector of Fig. 7A;
Fig. 7C shows the third connector of Fig.7A in an unlocked state;
Fig. 7D shows a top view of the third connector with a cam in the locked position;
Fig. 7E shows a top view of the third connector with the cam in an unlocked position;
Fig. 8 shows a side view of a further example of a third connector;
Fig. 9 shows a cross-sectional view of a further example of a third connector;
Figs. 10A and 10B show an example of first links;
Figs. 11A-11B shows another example of first links;
Fig. 12 shows a further alternative of first links;
Fig. 13 shows one example of a first connector; and
Fig. 14 shows an alternative harness with a fourth connection point, or fourth connector, arranged between the front legs of the animal.

### Description of the drawings

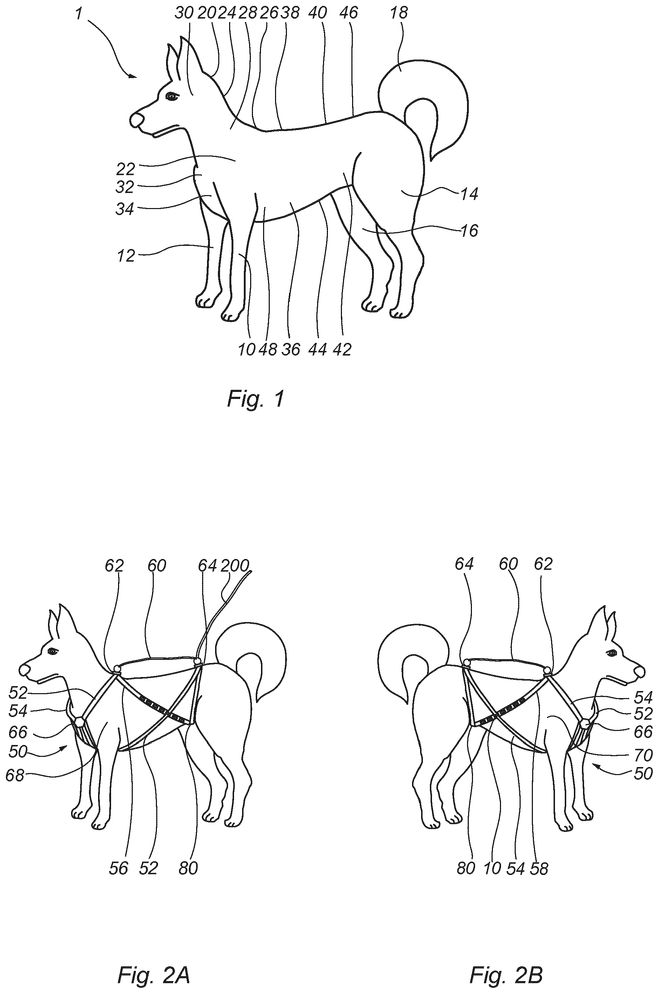

Fig. 1 shows a quadrupedal in the form of a dog 1. The dog 1 has a left front leg 10 and a right front leg 12 forming the front legs. In addition, the dog 1 has a left rear leg 14 and a right rear leg 16 forming the dogs rear legs. The dog 1 has a tail 18 located at the rear of the dog and a head 30 located at the front of the dog. The base of the head 30 joins the neck 28 at the back of the head 30, or the nape 20. The front legs 12 are at the top portion connected to the torso, or main body, of the dog 1. The top portion of the legs form the shoulders 22 of the dog 1. Starting at the nape 20 is the crest 24 that ends at the withers 26, and the withers 26 are located the top point of the shoulders 22. The neck 28 thereby runs from the head 30 to the shoulders 22.

The prosternum 32 is located at the top of the sternum 34, or the bone that ties the rib cage together, at the front of the dog. Fig. 1 further shows the chest 38 of the dog 1. The chest 38 is the entire rib cage of the dog 1. The ribs forming the rib cage connect to the sternum 34.

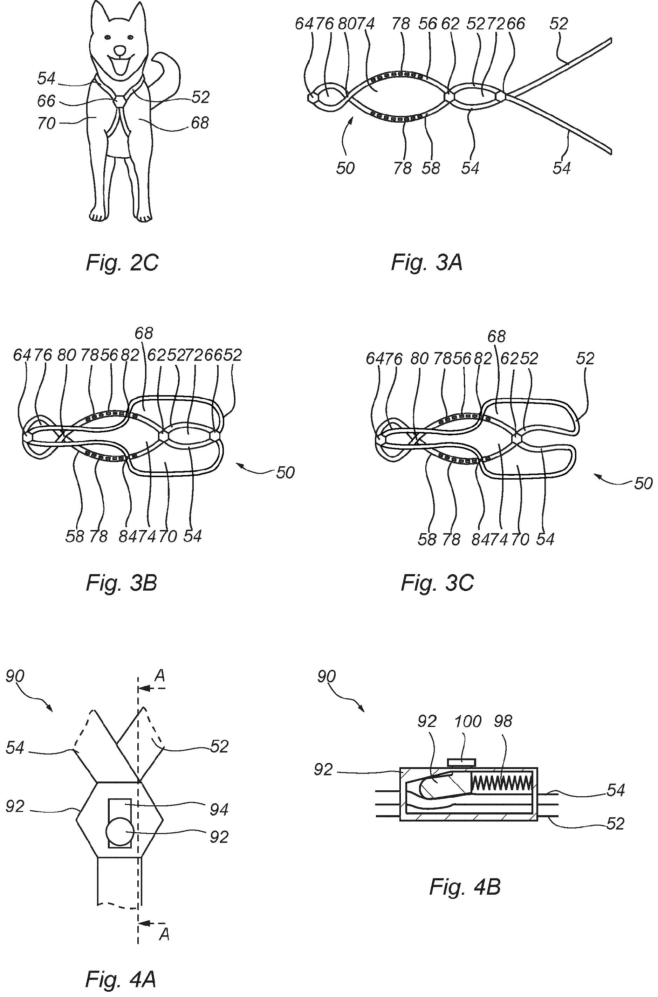

The back 38 of the dog 1 extends from the point of the shoulders 22, or withers 26, to the end of the rib cage. The loin 40 is the back 38 between the end of the rib cage and the beginning of the pelvic bone. The term back 38 is sometimes used to describe the back 38 and the loin 40. The flank 42 refers to the side of the dog between the end of the chest 36 and the rear legs 14, 16. The belly 44, or abdomen 44, is the underside of the dog from the end of its rib cage to its tail 18. The rump 46, or croup 46, is located at the rear of the dog 1 and is the portion of the posterior dorsum, posterior to the loin 40 and anterior to the tail 18. Fig. 2A shows the dog 1 in Fig. 1, viewed from a first side, or the left side, with the harness 50 arranged to, or applied on, or worn by, the dog 1. Figs. 2A-2C show the harness in its intended position, or placement, on the dog 1. Fig. 2B shows the dog 1 in Fig. 1, viewed from a second side, or the right side, Fig. 2C shows the dog wearing the harness 50 from the front, and Fig. 2D shows the harness 50 itself without the dog. Figs. 2 shows the harness 50 comprising a first strap 52, a second strap 54, a third strap 56, and a fourth strap 58. The first strap 52, the second strap 54, the third strap 56, and the fourth strap 58 are connected and extends from, a first connection point 60, arranged or positioned at the neck 28, or between the nape 20 and shoulders 22, of the dog 1. When the harness is arranged to, or worn by a dog, the first strap 52, the second strap 54, the third strap 56 and the fourth strap 58 are connected, to one another at, and extends from, a first connection point 62, or first connector 62. The first connection point 62 is intended, or arranged, to be positioned at the neck 28, or between the nape 20 and shoulders 22, of the dog 1. The first connection point 62 is formed by a first connector 62 that connects the first strap 52, the second strap 54, the third strap 56 and the fourth strap 58.

The first strap 52, or the left strap 52, extends from the first connection point 62 across, or around, the neck 28 on a first side, or left side, of the dog downwards to the prosternum 32 of the dog 1. The second strap 54, or the right strap 54, extends from the first connection point 62 across, or around, the neck 28 on a second side, or right side, of the dog 1 downwards to the prosternum 32 of the dog 1. The first strap 52 further extends from the prosternum 28 across the forechest 48, in between the front legs 10, 12, near the left front leg 10, and diagonally upwards, in a direction towards the back 38, across the first side of the chest 36 to the rump 46, or croup 46.

The second strap 54 further extends from the prosternum 32 across the forechest 48, in between the front legs 10, 12, near the right front leg 12, and diagonally upwards, in a direction towards the back 38, across the second side of the chest 36 to the rump 46, or croup 46.

The first strap 52 and the second strap 54 are connected to at a second connection point 64 located at the rump 46, or croup 46. The first strap 52 and the second strap 54 are further connected at the upper part of the sternum 34, or the prosternum 32, at a third connection point 66. The first strap 52 and the second strap 54 thereby extend from the first connection point 62 and are connected at the third connection point 66 so that a third loop 72 to receive and be placed around the neck 28 of the dog 1 is formed. The first strap 52 extending from the third connection point 66 to the second connection point 64 thereby forms a first loop 68 to arranged to receive, or encircle, a left front leg 10 of the dog 1.

The second strap 54 extending from the third connection point 66 to the second connection point 64 thereby forms a second loop 70 to arranged to receive, or encircle, a right front leg 12 of the dog 1.

The third strap 56 extends from the first connection point 62, in a diagonally downwards direction towards the belly 44, or abdomen 44, across the first side of the chest 36 of the dog 1. The third strap 56 further extends below, or transversely across the abdomen 44, or belly 44, up the second side of the dog 1 to the rump 46, or croup 46, of the dog 1, and the second connection point 64.

The fourth strap 58 extends from the first connection point 62, in a diagonally downwards direction towards the belly 44, or abdomen 44, across the second side of the chest 36 of the dog 1. The fourth strap 58 further extends below, or transversely across the belly 44, or abdomen 44, up the first side of the dog 1 to the rump 46, or croup 46, of the dog 1. The third strap 56 and the fourth strap 58 cross on another at the belly 44, or abdomen 44, of the dog 1.

The third strap 56 and the fourth strap 58 form a fourth loop 74 between the first connection point 62 and the crossing of the third strap 56 and the fourth strap 58 at the belly 44, or abdomen 44. The third strap 56 and the fourth strap 58 further form a fifth loop 76 between the crossing of the third strap 56 and the fourth strap 58 at the belly 44, and the second connection point 64. The fourth loop 74 encircles the sides of the chest 36 of the dog 1. The fifth loop 76 encircles the dog 1 at the rear of the dog, posterior to the loin 40 and anterior to the tail 18.

The first strap 52 crosses, or overlaps, the third strap 56 at the first side of the chest 36 of the dog 1. The second strap 54 crosses the fourth strap 58 at the second side of the chest 36 of the dog 1. The first strap and the third strap cross, or overlap, one another, at a fourth connection point positioned, on the first side of the chest, of the animal, or dog. The second strap and the fourth strap cross, or overlap, one another, at a fifth connection point positioned, on the second side of the chest, of the animal, or dog.

The first strap 52 is connected to the third strap 56 at the crossing of the two. The connection is formed by a first link 78, or first strap connector 78, in the form of an opening, or loop, formed in, or on, the third strap 56. The first strap 52 extends through the first link 78 and the first link 78 cooperates with the first strap 52 to prevent the first strap 52 from shifting in position along the third strap 56.

The second strap 54 is connected to the fourth strap 58 at the crossing of the two. The connection is formed by a second link 78, or second strap connector 78, in the form of an opening, or loop, formed in, or on, the fourth strap 58. The second strap 54 extends through the second link 78 and the second link 78 cooperates with the second strap 54 to prevent the second strap 54 from shifting in position along the fourth strap 58.

The third strap 56 is shown comprising a plurality of first links 78 and the fourth strap 58 is shown comprising a plurality of second links 78. The plurality of links 78 are arranged and spaced apart along the longitudinal direction of the respective strap 56, 58.

Figs. 2A and 2B further shows a fifth strap 60 connected to, and extending between, the first connection point 62 and the second connection point 64.

Fig. 3A shows a first top view of the harness, wherein the harness 50 is in a first state, or partly assembled state, or state when not worn, laid out on a plane to show the straps 52, 54, 56, 58 and the connection points 62, 64, 66.

Fig. 3A shows a first view of the harness in a first, partly disassembled state. Fig. 3A shows the first strap, the second strap, the third strap and the fourth strap connected at the first connection point. The first strap, the second strap, the third strap, and the fourth strap are connected to one another at the first connection point. The first strap 52, or the left strap 52, is configured to, or arranged to, extend from the first connection point 62 across, or around, the neck 28 on a first side, or left side, of the dog downwards to the sternum, or prosternum 32, of the dog 1.

The second strap 54, or the right strap 54, is configured to, or arranged to, extend from the first connection point 62 across, or around, the neck 28 on a second side, or right side, of the dog downwards to the sternum, or prosternum 32, of the dog 1.

The first strap 52 and the second strap 54 are further connected at the upper part of the sternum 34, or the prosternum 32, at a third connection point 66.

As discussed above, the first connection point 62 is formed by a first connector 62. The first connection point is configured to, or arranged to, be positioned at a neck, or between the nape and shoulders, of the animal, or dog.

The first strap and the seconds trap are shown to extend from the first connection point and are configured to, when the harness is assembled, to connect to the third connection point. This is shown in Figs. 3B-3C and discussed below.

In the example shown in Fig. 3A, the first strap and the second strap are connected to one another at the third connection point. The third connection point is, configured to, or arranged to, be positioned at the sternum, or prosternum, or front chest, of the animal.

The third strap and the fourth strap extends from the first connection point to the second connection point. The second connection point is configured to, or arranged to, be positioned at the croup of the animal.

In addition, the third strap and the fourth strap are configured to cross, or overlap, one another, at a sixth connection point. The sixth connection point, or the cross, or overlap, between the third strap and the fourth strap is located between the first connection point and the second connection point. to be positioned, at the abdomen or belly, of the animal. The overlap thereby forms the fourth loop 74 between the third strap 52 and the fourth strap 74 between the first connection point 62 and the point of crossing, or overlap, between the third strap 56 and the fourth strap 58, or sixth connection point.

Fig. 3A shows a fifth loop formed by the third strap 56 and the fourth strap 58, formed between the second connection point and the crossing 80, or overlap, or sixth connection point, of the third strap 56 and the fourth strap 58 at the waist, or belly of the dog.

Fig. 3B shows the harness in an assembled state, when not worn by the dog.

The first strap 52 and the second strap 54 extend from the first connection point 62 to the second connection point 64, via the third connection point 66. The third strap 56 and the fourth strap 58 extend from the first connection point 62 to the second connection point 64. The first strap 52 and the third strap 56 cross, or overlap, between the third connection point 66 and the second connection point 64. The first strap 52 and the third strap 56 cross, or overlap, one another, at a fourth connection point 82. The fourth connection point 82 is configured to, or arranged to, be positioned, on the first side of the chest, of the animal, or dog 1.

The first strap 52 and the second strap 54 extend from the first connection point 62 to the second connection point 64, via the third connection point 66. The third strap 56 and the fourth strap 58 extend from the first connection point 62 to the second connection point 64. The second strap 54 and the fourth strap 58 cross, or overlap, between the third connection point 66 and the second connection point 64. The second strap 54 and the fourth strap 58 cross, or overlap, one another, at a fifth connection point 84. The fifth connection point 84 is configured to, or arranged to, be positioned, on the right side of the chest, of the animal, or dog 1.

The first strap 52 and the third strap 56 form a first loop 68 configured to, arranged to, receive, or encircle, a left front leg 10 of the dog 1. The first loop 68 is formed between the first strap 52 that extends from the first connection point 62 to the third connection point 66, from the third connection point 66 to the fourth connection point 82, and the third strap 56 that extends from the first connection point 62 to the fourth connection point 82. The first loop 68 is configured to receive, and encircle, a left front leg of the animal, or dog 1. The first loop 68 is thereby a left front leg loop.

The second strap 54 and the fourth strap 58 form a second loop 70 configured to, arranged to, receive, or encircle, a right front leg 12 of the dog 1. The second loop 70 is formed between the second strap 54 that extends from the first connection point 62 to the third connection point 66, from the third connection point 66 to the fifth connection point 84, and the fourth strap 58 that extends from the first connection point 62 to the fifth connection point 84. The second loop 70 is configured to receive, and encircle, a right front leg 12 of the animal, or dog 1. The second loop 70 is thereby a right front leg loop.

The first strap 52 and the second strap 54 further forms a third loop 72, between the first connection point 62 and the third connection point 66.

Fig. 3C differs from Fig. 3B in that the harness 1 lacks, or does not have, a third connection point 66 of Fig. 3B. This also means that the harness has no third loop 72 as shown in Fig. 3B.

Fig. 4A shows an enlarged view of a first example of a third connector 90 and Fig. 4B shows a cross sectional view of the third connector 90 along A-A. The third connector 90 comprises a housing 92 and a slidably in a slot 94 of the housing wedge 96. The wedge 96 may slide and assume a locking position wherein the wedge clamps, or biases, the first strap 52 and the second strap 54 together between the wedge 96 and the housing 92. The wedge 96 is spring loaded, or biased, by a spring 98 to assume the locking position. The wedge further comprises a button 100, or head 100, protruding from the housing 92. The button 100 may be interacted with, and moved along the slot 94, to overcome the biasing of the spring to permit adjustment of the first strap 52 and the second strap 54 relative to the housing 92 in order to enlarge or decrease the opening of the third loop 72.

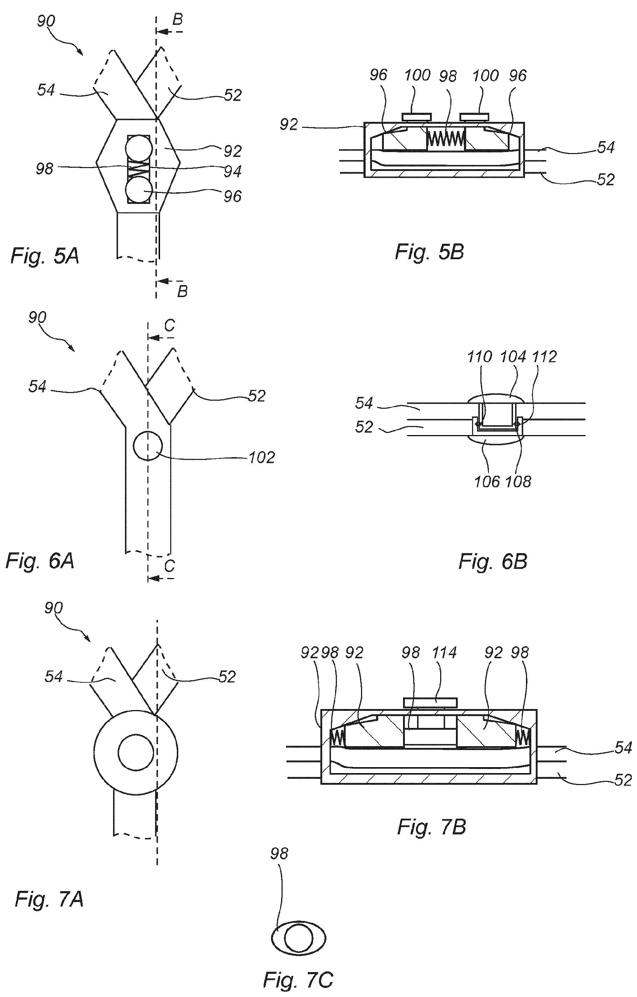

Fig. 5A shows an enlarged view of an alternative example of the third connector 90 and Fig. 5B shows a cross-sectional view along B-B that differs from the wedge lock of Figs. 4A-4B in that a further wedge 96 is arranged in the housing 92. The two wedges 96 are biased apart by a spring element 98, or spring 98, arranged between the wedges 96. Thus, the first strap 82 and the second strap 84 will be biased against one another and the housing 92, by the first wedge 96 and the further wedge 96. This provides an efficient locking along the first strap 52 and the second strap 54 along both longitudinal directions of the strap 52, 54. Unlocking of the wedge lock 90 is made by forcing the first wedge 96 and the further wedge 96 together by overcoming the biasing of the spring element 98.

Fig. 6A shows a top view of a further example of a third connector 90 and Fig. 6B shows a cross-sectional view of the third connector 90 of Fig. 6A along C-C. The third connector 90 is formed by a female member 106 arranged to the first strap 52 and a male member 104 arranged to the second strap 54. The female member 106 and the male member 104 are cooperating members. The female member 106 and the male member 106 form a snap fastener 90.

Fig. 7A shows a further example of a third connector 90 in the form of a cam lock 90, comprising a cam 116 rotatably arranged to the housing 92. Fig. 7B shows a cross-sectional view of the cam lock 90 of Fig. 7A. Fig. 7C shows the third connector of Fig.7A in an unlocked state. The cam lock 90 has a symmetrical cam 116 having two peaks that are arranged to interact, or cooperate with, the first wedge 96 and the further wedge 96. At the rotation of the cam 116, increase the distance between the two wedges 96, and move the wedges 96 relative to the housing 92 to assume a strap locking position. The wedges 96 are spring loaded by two springs 98 and at the rotation of the cam 116 to assume an unlocked state the wedges 96 move to decrease the distance between the two wedges 96 to unlock and allow adjustment of the first strap 52 and the second strap 54 relative to the housing 92, and the cam lock 90. The cam comprises a knob 114 protruding from the housing 92 arranged to the interacted with to rotate the cam 116.

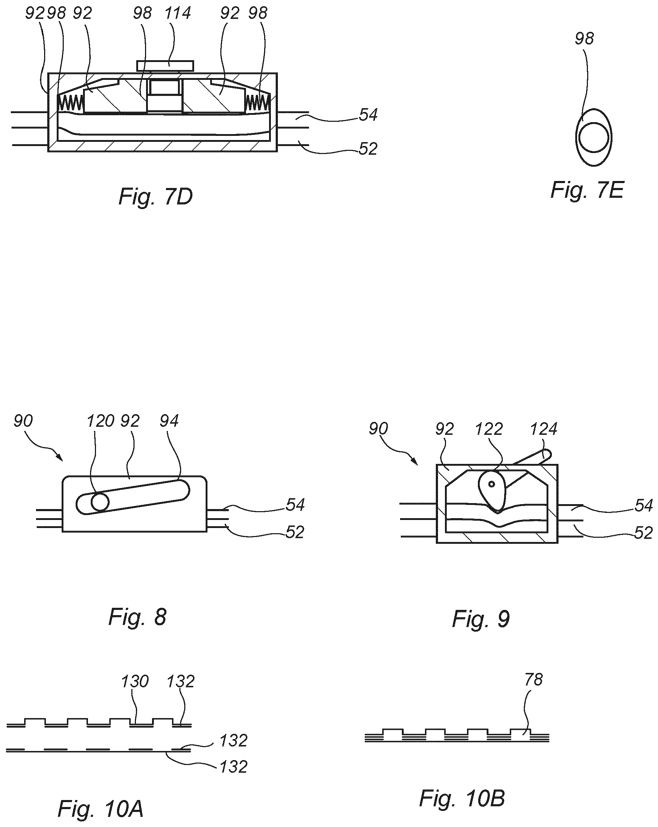

Fig. 7D shows the cam lock 90 and the cam 116 and the wedges 96 in the unlocked state, and Fig. 7E shows a top view of the cam 116 itself rotated to the unlocked state.

Fig. 8 shows a side view of a further example of a third connector 90, comprising a locking bar 120, or axle 120, arranged to slide in a slot 94 in the housing 92. The slot 94 is inclined in relation to the housing 92. Fig. 8 shows the locking bar 120 arranged in a locking position with the locking bar 120 positioned at a first end of the slot 94. Moving the locking bar to the opposite end of the slot 94 will release the biasing of the locking bar against the first strap 52 and the second strap 54 relative to the housing 92 and allow adjustment of the first strap 52 and the second strap 54 relative to the housing 92.

Fig. 9 shows a cross-sectional view of a further example of a third connector 90 in the form of a cam lock 90. The cam 122 is rotationally arranged, to rotate around a rotation axis, relative to the housing 92 and may be rotated to assume a locked position and an unlocked position. The cam 122 is further connected to a lever 124 that protrudes out from a slot 94 in the housing. Moving the lever 124, or pivoting the lever 124, relative to will thus in turn rotate the cam 122. At the rotation of the cam 122 around the rotation axis, relative the housing 92, from the unlocked position to the locked position a peak of the cam 122 will bias the first strap 52 and the second strap 54 to the housing 92 and lock the first strap 52 and the second strap 54 relative to the third connector 90. Moving the lever 124 in an opposite direction will rotate the cam 124 around the rotation axis. The biasing of the cam 122 will be released by the cam peaks rotating with the lever 124 and the third connector 90 will unlock and permit adjustment of the first strap 52 and second strap 54 relative to the third connector 90.

Fig. 10A and 10B show two examples of a first links 78 that are arranged to connect the first strap to the third strap and the second strap to the fourth strap.

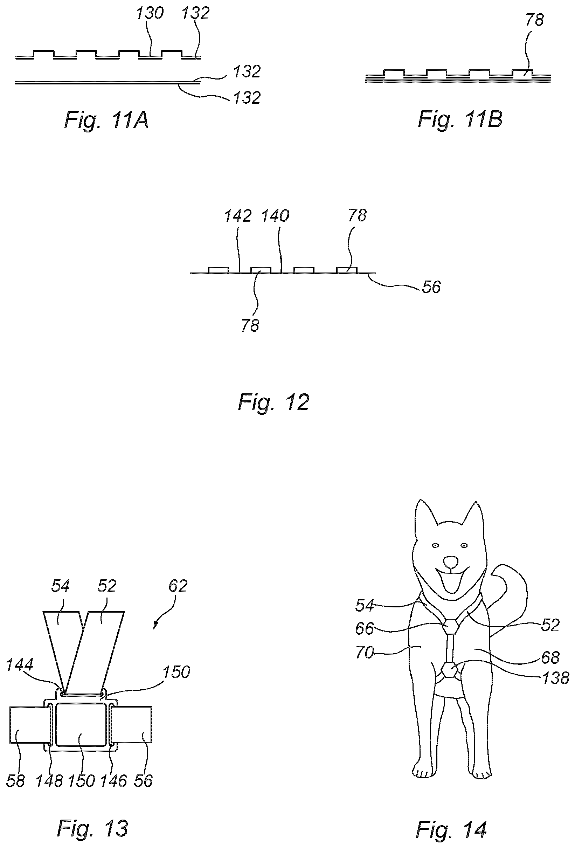

Fig. 11A shows the third strap formed by a first strap member 130 and a second strap member 132, arranged to be overlaid and connected to one another. The first strap member 130 comprises a plurality of hook patches 134 arranged on a first side of the first strap member 130 and the second strap member 132 comprises a plurality of loop patches 136 arranged on a second side, facing the first side of the first strap member 130. The hooks and loop patches 134, 136 together form a hook-and-loop fastener that cooperates to secure, or fasten, and connect the first strap member 130 to the second strap member 132. The hook patches 134 and the loop patches 136 are intermittently spaced, or arranged, on the first strap member 130 and the second strap member 132 such that a plurality of first links 78 are formed, for receiving, or threading of a first strap 52, or second strap 54, through the first link 78. Fig. 10B shows the first strap member 130 connected, or attached to the second strap member, by the hook-and-loop fasteners.

Fig. 11A shows an alternative to the first links of Fig. 10A wherein the second strap member 132 comprises a continuous, along the second strap member, single patch of loops arranged to cooperate with the plurality of hook patches 134 of the first strap member 130. Fig. 11B shows the first strap member 130 connected, or attached, to the second strap member 132 to form the first links 78.

Fig. 12 shows a further alternative of first links 78 formed by a plurality of rings 138 attached, or sewn, to the third strap 56 or the fourth strap 58. Each ring allows for a first strap 52 or second strap 54 to extend through, or be threaded through, a link 78, to prevent movement of the first strap 52, or second strap 54, relative to the third strap 56, or fourth strap 58. The rings forming the link 78 are D-shaped links. The first links 78 are formed by shown formed by attaching a first layer of weave to a second layer of weave at a first attachment point 140 and a second attachment point 142. The first layer and the second layer are not attached, or joined, between the first attachment point 140 and the second attachment point 142 and a first link 78 is thereby formed between the first attachment point 140 and the second attachment point 142.

Fig. 13 shows one example of a first connector 62 in the form of a buckle 62 having a body 150. The buckle 62 is a flat metallic buckle comprising a first opening 144, a second opening 146 and a third opening 148. The first strap 52 and the second strap 54 are threaded through, and attached to, and extend from, the first opening 144. The third strap 56 is threaded through, attached to, and extend from the third opening 146. The fourth strap 56 is threaded through, attached to, and extend from the fourth opening 148. The first connector 62 is further shown having a central opening 150 arranged to attach to a leash. The leash is shown connected to the second connection point (64) of Fig. 2A.

Fig. 14 shows an alternative embodiment of the harness 50 wherein the first strap 52 and the second strap 54 are connected at a seventh connection point 138 by a fourth connector 138. The fourth connector 138 is arranged, or positioned, at the forechest 48, or between the forelegs 10, 12, of the dog 1. The fourth connector is shown having the same properties as the third connector 66.

### Item list

- 1: dog
- 10: left front leg
- 12: right front leg
- 14: left rear leg
- 16: right rear leg
- 18: tail
- 20: nape
- 22: shoulder
- 24: crest
- 26: withers
- 28: neck
- 30: head
- 32: prosternum
- 34: sternum
- 36: chest
- 38: back
- 40: loin
- 42: flank
- 44: belly, or abdomen
- 46: rump, or croup
- 48: forechest
- 50: harness
- 52: first strap
- 54: second strap
- 56: third strap
- 58: fourth strap
- 60: fifth strap
- 62: first connection point, first connector
- 64: second connection point, second connector
- 66: third connection point, third connector
- 68: first loop
- 70: second loop
- 72: third loop
- 74: fourth loop
- 76: fifth loop
- 78: links, or strap connectors
- 80: third strap and fourth strap crossing point, or sixth connection point
- 82: fourth connection point
- 84: fifth connection point
- 90: third connector
- 92: housing
- 94: slot
- 96: wedge
- 98: spring
- 100: wedge button, or head
- 102: snap fastener
- 104: male member
- 106: female member
- 108: locking ring
- 110: male member ring recess
- 112: female member ring recess
- 114: knob
- 116: cam
- 118: spring
- 120: bar
- 122: cam
- 124: lever
- 130: first strap member
- 132: second strap member
- 134: hook patch
- 136: loop patch
- 138: seventh connection point, fourth connector
- 140: first attachment point
- 142: second attachment point
- 144: first opening
- 146: second opening
- 148: third opening
- 150: central opening
- 200: leash

## Claims

1. A harness (50) for a quadrupedal animal (1), such as a dog (1), comprising:
a first strap (52), a second strap (54), a third strap (56), and a fourth strap (58),
wherein the first strap, the second strap, the third strap, and the fourth strap are connected to one another at a first connection point (62), and
wherein the first strap, the second strap, the third strap, and the fourth strap are connected to one another at, a second connection point (64), and
wherein the first strap, the second strap, the third strap, and the fourth strap extend from the first connection point to the second connection point,
wherein the first connection point is configured to, or arranged to, be positioned at a neck, or between the nape and shoulders, of the animal,
wherein the second connection point is configured to, or arranged to, be positioned at the croup of the animal, and
the first strap is configured to, or arranged to, extend from the first connection point, across the neck, across the sternum, or prosternum, in between the front legs, across a first side, or left side, of the chest of the animal, and to the croup, or rump, of the animal, and
the second strap is configured to, or arranged to, extend from the first connection point, across the neck, across the sternum, or prosternum, in between the front legs, and across a second side, or right side, of the chest of the animal, and to the croup, or rump, of the animal, and
the third strap is configured to, or arranged to, extend from the first connection point, across the first side of the chest, below, or transversely across, the abdomen or belly, to the second connection point,
the fourth strap is configured to, or arranged to, extend from the first connection point, across the second side of the chest, below or transversely across, the abdomen or belly, to the second connection point,
the first strap and the third strap cross, or overlap, one another, at a fourth connection point (82) configured to be positioned, on the first side of the chest, of the animal,
the second strap and the fourth strap are cross, or overlap, one another, at a fifth connection point (84) configured to, or arranged to, be positioned, on the second side of the chest, of the animal, and
the third strap and the fourth strap cross, or overlap, one another, at a sixth connection point (80), configured to, or arranged to, be positioned, at the abdomen or belly, of the animal.

2. The harness according to claim 1, wherein the first strap (52) is arranged to extend, from the first connection point (62) to the second connection point (64), on the inner side of the left front leg of the animal, and wherein the second strap (54) is arranged to extend, from the first connection point to the second connection point, on the inner side of the right front leg of the animal.

3. The harness according to claims 1-2, wherein the first strap (52) and the third strap (56) form a first loop (68) between the first connection point and the fourth connection point, wherein the first loop is configured to, or arranged to, receive and encircle a left front leg of the animal.

4. The harness according to claims 1-3, wherein the second strap (54) and the fourth strap (58) are arranged to form a second loop (70) between the first connection point and the fifth connection point, wherein the second loop is configured to, or arranged to, receive and encircle a right front leg of the animal.

5. The harness according to claims 1-4, wherein the third strap (56) has a first link (78), or first strap connector (78), that forms the fourth connection point (82), that connects the first strap to the third strap.

6. The harness according to claims 1-4, wherein the fourth strap (58) has a first link (78), or first strap connector (78), that forms the fifth connection point (84), that connects the second strap (54) to the fourth strap (58).

7. The harness according to any of claims 1-6, wherein the first strap (52) and the second strap (54) are connected to one another at a third connection point (66), arranged between the first connection point (62) and the second connection point (64), wherein the third connection point (66) is configured to, or arranged to, be positioned at the sternum, or prosternum, or front chest, of the animal.

8. The harness according to claim 7, wherein the first strap and the second strap form a third loop (72), between the first connection point (62) and the third connection point (66), configured to, or arranged to, receive and encircle the neck of the animal.

9. The harness according to claim 7-8, wherein the third connection point (66) is formed by a third connector (66) that connects the first strap (52) to the second strap (54) and prevents the first strap from moving relative to the second strap.

10. The harness according to claims 9, wherein the third connector (66) comprises a housing (92) and a locking element (96) movable relative to the housing, wherein the locking element can assume a position to bias, or lock, the first strap (52) and the second strap (54) to each other and to the housing (92).

11. The harness according to claim 9-10, wherein the third connector (66) is an adjustable connector, movable along the extension direction of the first strap (52) and the second strap (54), to adjust an opening of a third loop (72).

12. The harness of any of claims 1-9, wherein the third strap (56) and the fourth strap (58) are configured to, or arranged to, form a fourth loop (74), between the first connection point (62) and the sixth connection point (80), and the third strap (56) and the fourth strap (58) are arranged to form a fifth loop (76), between the sixth connection point (80) and the second connection point (64).

13. The harness of any of claim 1-12, further comprising a fifth strap (60) that is connected to, and extends between, the first connection point (62) and the second connection point (64).

14. Use of the harness according to any claims 1-13, on a quadrupedal animal, such as a dog,
wherein the first connection point (62) is positioned at a neck, or between the nape and shoulders, of the animal,
wherein the second connection point (64) is positioned at the croup of the animal, and
wherein the first strap (52) is positioned and extends from the first connection point, across the neck, across the sternum, or prosternum, in between the front legs, across a first side, or left side, of the chest of the animal, and to the croup, or rump, of the animal, to the second connection point, and
wherein the second strap (54) is positioned and extends from the first connection point (62), across the neck, across the sternum, or prosternum, in between the front legs, across a second side, or right side, of the chest of the animal, and to the croup, or rump, of the animal, to the second connection point, and
wherein the third strap (56) is positioned and extends from the first connection point (62), across the first side of the chest, below, or transversely across, the abdomen or belly, to the second connection point,
wherein the fourth strap is positioned and extends from the first connection point, across the second side of the chest, below or transversely across, the abdomen or belly, to the second connection point,
wherein the first strap and the third strap cross, or overlap, one another, on the first side of the chest, of the animal, at the fourth connection point (82),
wherein the second strap and the fourth strap cross, or overlap, one another, on the second side of the chest, of the animal, at the fifth connection point (84), and
wherein the third strap and the fourth strap cross, or overlap, one another, at the abdomen or belly, of the animal, at the sixth connection point (80).

15. A system comprising:
the harness (50) according to any claims 1-13, and a leash (200), wherein the harness comprises a leash connector at the first connection point (62) or the second connection point (64), and the leash (200) is connected, or coupled, to the harness (50) via the leash connector.

## Patentansprüche

1. Geschirr (50) für ein vierbeiniges Tier (1), wie etwa einen Hund (1), umfassend:
einen ersten Gurt (52), einen zweiten Gurt (54), einen dritten Gurt (56) und einen vierten Gurt (58),
wobei der erste Gurt, der zweite Gurt, der dritte Gurt und der vierte Gurt an einem ersten Verbindungspunkt (62) miteinander verbunden sind, und
wobei der erste Gurt, der zweite Gurt, der dritte Gurt und der vierte Gurt an, einem zweiten Verbindungspunkt (64) miteinander verbunden sind, und
wobei sich der erste Gurt, der zweite Gurt, der dritte Gurt und der vierte Gurt von dem ersten Verbindungspunkt zu dem zweiten Verbindungspunkt erstrecken,
wobei der erste Verbindungspunkt konfiguriert ist, oder angeordnet ist, an einem Hals, oder zwischen dem Nacken und Schultern, des Tieres positioniert zu werden,
wobei der zweite Verbindungspunkt konfiguriert ist, oder angeordnet ist, an der Kruppe des Tieres positioniert zu werden, und
der erste Gurt konfiguriert ist, oder angeordnet ist, sich von dem ersten Verbindungspunkt, über den Hals, über das Brustbein, oder vordere Brustbein, zwischen den Vorderbeinen, über eine erste Seite, oder linke Seite, der Brust des Tieres, und zu der Kruppe, oder dem Rumpf, des Tieres zu erstrecken, und
der zweite Gurt konfiguriert ist, oder angeordnet ist, sich von dem ersten Verbindungspunkt, über den Hals, über das Brustbein, oder vordere Brustbein, zwischen den Vorderbeinen, und über eine zweite Seite, oder rechte Seite, der Brust des Tieres, und zu der Kruppe, oder dem Rumpf, des Tieres zu erstrecken, und
der dritte Gurt konfiguriert ist, oder angeordnet ist, sich von dem ersten Verbindungspunkt, über die erste Seite der Brust, unterhalb von, oder quer über, den Unterleib oder Bauch, zu dem zweiten Verbindungspunkt zu erstrecken,
der vierte Gurt konfiguriert ist, oder angeordnet ist, sich von dem ersten Verbindungspunkt, über die zweite Seite der Brust, unterhalb von oder quer über, den Unterleib oder Bauch, zu dem zweiten Verbindungspunkt zu erstrecken,
der erste Gurt und der dritte Gurt einander kreuzen, oder überlappen, an einem vierten Verbindungspunkt (82), der konfiguriert ist, auf der ersten Seite der Brust, des Tieres, positioniert zu werden,
der zweite Gurt und der vierte Gurt einander kreuzen, oder überlappen, an einem fünften Verbindungspunkt (84), der konfiguriert ist, oder angeordnet ist, auf der zweiten Seite der Brust, des Tieres, positioniert zu werden, und
der dritte Gurt und der vierte Gurt einander kreuzen, oder überlappen, an einem sechsten Verbindungspunkt (80), der konfiguriert ist, oder angeordnet ist, an dem Unterleib oder Bauch, des Tieres, positioniert zu werden.

2. Geschirr nach Anspruch 1, wobei der erste Gurt (52) angeordnet ist, sich, von dem ersten Verbindungspunkt (62) zu dem zweiten Verbindungspunkt (64), auf der Innenseite des linken Vorderbeins des Tieres zu erstrecken, und wobei der zweite Gurt (54) angeordnet ist, sich, von dem ersten Verbindungspunkt zu dem zweiten Verbindungspunkt, auf der Innenseite des rechten Vorderbeins des Tieres zu erstrecken.

3. Geschirr nach einem der Ansprüche 1-2, wobei der erste Gurt (52) und der dritte Gurt (56) eine erste Schlaufe (68) zwischen dem ersten Verbindungspunkt und dem vierten Verbindungspunkt bilden, wobei die erste Schlaufe konfiguriert ist, oder angeordnet ist, ein linkes Vorderbein des Tieres aufzunehmen und zu umschließen.

4. Geschirr nach einem der Ansprüche 1-3, wobei der zweite Gurt (54) und der vierte Gurt (58) angeordnet sind, eine zweite Schlaufe (70) zwischen dem ersten Verbindungspunkt und dem fünften Verbindungspunkt zu bilden, wobei die zweite Schlaufe konfiguriert ist, oder angeordnet ist, ein rechtes Vorderbein des Tieres aufzunehmen und zu umschließen.

5. Geschirr nach einem der Ansprüche 1-4, wobei der dritte Gurt (56) ein erstes Verbindungsglied (78) oder einen ersten Gurtverbinder (78) aufweist, der/das den vierten Verbindungspunkt (82) bildet, der den ersten Gurt mit dem dritten Gurt verbindet.

6. Geschirr nach einem der Ansprüche 1-4, wobei der vierte Gurt (58) ein erstes Verbindungsglied (78) oder einen ersten Gurtverbinder (78) aufweist, der/das den fünften Verbindungspunkt (84) bildet, der den zweiten Gurt (54) mit dem vierten Gurt (58) verbindet.

7. Geschirr nach einem der Ansprüche 1-6, wobei der erste Gurt (52) und der zweite Gurt (54) an einem dritten Verbindungspunkt (66) miteinander verbunden sind, der zwischen dem ersten Verbindungspunkt (62) und dem zweiten Verbindungspunkt (64) angeordnet ist, wobei der dritte Verbindungspunkt (66) konfiguriert ist, oder angeordnet ist, an dem Brustbein, oder vorderen Brustbein, oder der vorderen Brust, des Tieres positioniert zu werden.

8. Geschirr nach Anspruch 7, wobei der erste Gurt und der zweite Gurt eine dritte Schlaufe (72) bilden, zwischen dem ersten Verbindungspunkt (62) und dem dritten Verbindungspunkt (66), die konfiguriert ist, oder angeordnet ist, den Hals des Tieres aufzunehmen und zu umschließen.

9. Geschirr nach einem der Ansprüche 7-8, wobei der dritte Verbindungspunkt (66) durch einen dritten Verbinder (66) gebildet ist, der den ersten Gurt (52) mit dem zweiten Gurt (54) verbindet und verhindert, dass sich der erste Gurt relativ zu dem zweiten Gurt bewegt.

10. Geschirr nach Anspruch 9, wobei der dritte Verbinder (66) ein Gehäuse (92) und ein relativ zu dem Gehäuse bewegliches Verriegelungselement (96) umfasst, wobei das Verriegelungselement eine Position einnehmen kann, um den ersten Gurt (52) und den zweiten Gurt (54) aneinander und an dem Gehäuse (92) vorzuspannen, oder zu verriegeln.

11. Geschirr nach einem der Ansprüche 9-10, wobei der dritte Verbinder (66) ein einstellbarer Verbinder ist, der entlang der Erstreckungsrichtung des ersten Gurts (52) und des zweiten Gurts (54) beweglich ist, um eine Öffnung einer dritten Schlaufe (72) einzustellen.

12. Geschirr nach einem der Ansprüche 1-9, wobei der dritte Gurt (56) und der vierte Gurt (58) konfiguriert sind, oder angeordnet sind, eine vierte Schlaufe (74) zu bilden, zwischen dem ersten Verbindungspunkt (62) und dem sechsten Verbindungspunkt (80), und der dritte Gurt (56) und der vierte Gurt (58) angeordnet sind, eine fünfte Schlaufe (76) zu bilden, zwischen dem sechsten Verbindungspunkt (80) und dem zweiten Verbindungspunkt (64).

13. Geschirr nach einem der Ansprüche 1-12, ferner umfassend einen fünften Gurt (60), der verbunden ist mit, und sich erstreckt zwischen, dem ersten Verbindungspunkt (62) und dem zweiten Verbindungspunkt (64).

14. Verwendung des Geschirrs nach einem der Ansprüche 1-13, an einem vierbeinigen Tier, wie etwa einem Hund,
wobei der erste Verbindungspunkt (62) an einem Hals, oder zwischen dem Nacken und Schultern, des Tieres positioniert ist, wobei der zweite Verbindungspunkt (64) an der Kruppe des Tieres positioniert ist, und
wobei der erste Gurt (52) positioniert ist und sich von dem ersten Verbindungspunkt, über den Hals, über das Brustbein, oder vordere Brustbein, zwischen den Vorderbeinen, über eine erste Seite, oder linke Seite, der Brust des Tieres, und zu der Kruppe, oder dem Rumpf, des Tieres, zu dem zweiten Verbindungspunkt erstreckt, und
wobei der zweite Gurt (54) positioniert ist und sich von dem ersten Verbindungspunkt (62), über den Hals, über das Brustbein, oder vordere Brustbein, zwischen den Vorderbeinen, über eine zweite Seite, oder rechte Seite, der Brust des Tieres, und zu der Kruppe, oder dem Rumpf, des Tieres, zu dem zweiten Verbindungspunkt erstreckt, und
wobei der dritte Gurt (56) positioniert ist und sich von dem ersten Verbindungspunkt (62), über die erste Seite der Brust, unterhalb von, oder quer über, den Unterleib oder Bauch, zu dem zweiten Verbindungspunkt erstreckt,
wobei der vierte Gurt positioniert ist und sich von dem ersten Verbindungspunkt, über die zweite Seite der Brust, unterhalb von oder quer über, den Unterleib oder Bauch, zu dem zweiten Verbindungspunkt erstreckt,
wobei der erste Gurt und der dritte Gurt einander, auf der ersten Seite der Brust, des Tieres, an dem vierten Verbindungspunkt (82) kreuzen, oder überlappen,
wobei der zweite Gurt und der vierte Gurt einander, auf der zweiten Seite der Brust, des Tieres, an dem fünften Verbindungspunkt (84) kreuzen, oder überlappen, und
wobei der dritte Gurt und der vierte Gurt einander, an dem Unterleib oder Bauch, des Tieres, an dem sechsten Verbindungspunkt (80) kreuzen, oder überlappen.

15. System, umfassend:
das Geschirr (50) nach einem der Ansprüche 1-13, und eine Leine (200), wobei das Geschirr einen Leinenverbinder an dem ersten Verbindungspunkt (62) oder dem zweiten Verbindungspunkt (64) umfasst, und die Leine (200) über den Leinenverbinder mit dem Geschirr (50) verbunden, oder gekoppelt, ist.

## Revendications

1. Harnais (50) pour animal quadrupède (1), tel qu'un chien (1), comprenant :
une première sangle (52), une deuxième sangle (54), une troisième sangle (56) et une quatrième sangle (58),
dans lequel la première sangle, la deuxième sangle, la troisième sangle et la quatrième sangle sont reliées entre elles au niveau d'un premier point de liaison (62), et
dans lequel la première sangle, la deuxième sangle, la troisième sangle et la quatrième sangle sont reliées entre elles au niveau d'un deuxième point de liaison (64), et
dans lequel la première sangle, la deuxième sangle, la troisième sangle et la quatrième sangle s'étendent du premier point de liaison au deuxième point de liaison,
dans lequel le premier point de liaison est configuré ou agencé pour être positionné au niveau du cou, ou entre la nuque et les épaules, de l'animal,
dans lequel le deuxième point de liaison est configuré ou agencé pour être positionné au niveau de la croupe de l'animal, et
la première sangle est configurée ou agencée pour s'étendre à partir du premier point de liaison, en passant par le cou, le sternum, ou le presternum, entre les pattes avant, sur un premier côté, ou côté gauche, de la poitrine de l'animal, et jusqu'à la croupe, ou l'arrière-train, de l'animal, et
la deuxième sangle est configurée ou agencée pour s'étendre à partir du premier point de liaison, en passant par le cou, le sternum, ou le presternum, entre les pattes avant, et sur un second côté, ou côté droit, de la poitrine de l'animal, et jusqu'à la croupe, ou l'arrière-train, de l'animal, et
la troisième sangle est configurée ou agencée pour s'étendre à partir du premier point de liaison, en passant par le premier côté de la poitrine, en dessous de l'abdomen ou du ventre, ou transversalement à celui-ci, jusqu'au deuxième point de liaison, la quatrième sangle est configurée ou agencée pour s'étendre à partir du premier point de liaison, en passant par le second côté de la poitrine, en dessous de l'abdomen ou du ventre, ou transversalement à celui-ci, jusqu'au deuxième point de liaison, la première sangle et la troisième sangle se croisent ou se chevauchent au niveau d'un quatrième point de liaison (82) configuré pour être positionné sur le premier côté de la poitrine de l'animal,
la deuxième sangle et la quatrième sangle se croisent ou se chevauchent au niveau d'un cinquième point de liaison (84) configuré ou agencé pour être positionné sur le second côté de la poitrine de l'animal, et
la troisième sangle et la quatrième sangle se croisent ou se chevauchent au niveau d'un sixième point de liaison (80), configuré ou agencé pour être positionné au niveau de l'abdomen ou du ventre de l'animal.

2. Harnais selon la revendication 1, dans lequel la première sangle (52) est agencée pour s'étendre, du premier point de liaison (62) au deuxième point de liaison (64), sur le côté intérieur de la patte avant gauche de l'animal, et dans lequel la deuxième sangle (54) est agencée pour s'étendre, du premier point de liaison au deuxième point de liaison, sur le côté intérieur de la patte avant droite de l'animal.

3. Harnais selon les revendications 1-2, dans lequel la première sangle (52) et la troisième sangle (56) forment une première boucle (68) entre le premier point de liaison et le quatrième point de liaison, dans lequel la première boucle est configurée ou agencée pour recevoir et entourer une patte avant gauche de l'animal.

4. Harnais selon les revendications 1 à 3, dans lequel la deuxième sangle (54) et la quatrième sangle (58) sont agencées pour former une deuxième boucle (70) entre le premier point de liaison et le cinquième point de liaison, dans lequel la deuxième boucle est configurée ou agencée pour recevoir et entourer une patte avant droite de l'animal.

5. Harnais selon les revendications 1 à 4, dans lequel la troisième sangle (56) comporte un premier élément de liaison (78), ou premier connecteur de sangle (78), qui forme le quatrième point de liaison (82), qui relie la première sangle à la troisième sangle.

6. Harnais selon les revendications 1 à 4, dans lequel la quatrième sangle (58) comporte un premier élément de liaison (78), ou premier connecteur de sangle (78), qui forme le cinquième point de liaison (84), qui relie la deuxième sangle (54) à la quatrième sangle (58).

7. Harnais selon l'une quelconque des revendications 1 à 6, dans lequel la première sangle (52) et la deuxième sangle (54) sont reliées entre elles au niveau d'un troisième point de liaison (66), agencé entre le premier point de liaison (62) et le deuxième point de liaison (64), dans lequel le troisième point de liaison (66) est configuré ou agencé pour être positionné au niveau du sternum, du prosternum ou de la poitrine avant de l'animal.

8. Harnais selon la revendication 7, dans lequel la première sangle et la deuxième sangle forment une troisième boucle (72), entre le premier point de liaison (62) et le troisième point de liaison (66), configurée ou agencée pour recevoir et entourer le cou de l'animal.

9. Harnais selon la revendication 7-8, dans lequel le troisième point de liaison (66) est formé par un troisième connecteur (66) qui relie la première sangle (52) à la deuxième sangle (54) et empêche la première sangle de bouger par rapport à la deuxième sangle.

10. Harnais selon la revendication 9, dans lequel le troisième connecteur (66) comprend un logement (92) et un élément de verrouillage (96) mobile par rapport au logement, dans lequel l'élément de verrouillage peut adopter une position dans laquelle il sollicite ou verrouille la première sangle (52) et la deuxième sangle (54) l'une par rapport à l'autre et par rapport au logement (92).

11. Harnais selon les revendications 9-10, dans lequel le troisième connecteur (66) est un connecteur réglable, mobile le long de la direction d'extension de la première sangle (52) et de la deuxième sangle (54), pour régler une ouverture d'une troisième boucle (72).

12. Harnais selon l'une quelconque des revendications 1 à 9, dans lequel la troisième sangle (56) et la quatrième sangle (58) sont configurées ou agencées pour former une quatrième boucle (74), entre le premier point de liaison (62) et le sixième point de liaison (80), et la troisième sangle (56) et la quatrième sangle (58) sont agencées pour former une cinquième boucle (76), entre le sixième point de liaison (80) et le deuxième point de liaison (64).

13. Harnais selon l'une quelconque des revendications 1 à 12, comprenant en outre une cinquième sangle (60) qui est reliée au premier point de liaison (62) et au deuxième point de liaison (64), et s'étend entre ceux-ci.

14. Utilisation du harnais selon l'une quelconque des revendications 1 à 13, sur un animal quadrupède, tel qu'un chien,
dans laquelle le premier point de liaison (62) est positionné au niveau du cou, ou entre la nuque et les épaules, de l'animal, dans laquelle le deuxième point de liaison (64) est positionné au niveau de la croupe de l'animal, et
dans laquelle la première sangle (52) est positionnée et s'étend à partir du premier point de liaison, en passant par le cou, le sternum ou le prosternum, entre les pattes avant, sur un premier côté, ou côté gauche, de la poitrine de l'animal, et jusqu'à la croupe, ou l'arrière-train, de l'animal, jusqu'au deuxième point de liaison, et
dans laquelle la deuxième sangle (54) est positionnée et s'étend à partir du premier point de liaison (62), en passant par le cou, le sternum ou le prosternum, entre les pattes avant, sur un second côté, ou côté droit, de la poitrine de l'animal, et jusqu'à la croupe, ou l'arrière-train, de l'animal, jusqu'au deuxième point de liaison, et
dans laquelle la troisième sangle (56) est positionnée et s'étend à partir du premier point de liaison (62), en passant par le premier côté de la poitrine, en dessous de l'abdomen ou du ventre, ou transversalement à celui-ci, jusqu'au deuxième point de liaison,
dans laquelle la quatrième sangle est positionnée et s'étend à partir du premier point de liaison, en passant par le second côté de la poitrine, en dessous de l'abdomen ou du ventre, ou transversalement à celui-ci, jusqu'au deuxième point de liaison, dans laquelle la première sangle et la troisième sangle se croisent ou se chevauchent sur le premier côté de la poitrine de l'animal, au niveau du quatrième point de liaison (82), dans laquelle la deuxième sangle et la quatrième sangle se croisent ou se chevauchent sur le second côté de la poitrine de l'animal, au niveau du cinquième point de liaison (84), et dans laquelle la troisième sangle et la quatrième sangle se croisent ou se chevauchent au niveau de l'abdomen ou du ventre de l'animal, au niveau du sixième point de liaison (80).

15. Système comprenant :
le harnais (50) selon l'une quelconque des revendications 1 à 13, et une laisse (200), dans lequel le harnais comprend un connecteur de laisse au niveau du premier point de liaison (62) ou du deuxième point de liaison (64), et la laisse (200) est reliée, ou couplée, au harnais (50) par l'intermédiaire du connecteur de laisse.
